# EUROPEAN PATENT APPLICATION

(11) **EP 2 604 755 A1**
(43) Date of publication of application: **19.06.2013**
(21) Application number: 12197075.0
(22) Date of filing: 13.12.2012
(51) Int. Cl.: E01C 5/00, E01C 5/06, E01C 11/22

(54) **A precast cementitious paving element and in particular a kerb element**

(30) Priority: 14.12.2011 ZA 201109215; 27.07.2012 ZA 201205695
(71) Applicant: Bosun Brick (Proprietary) Limited, Midrand (ZA)
(72) Inventor: Wertheim Aymes, David Carmichael Alexander, 2194 Randburg (ZA)
(74) Representative: Makovski, Priscilla Mary

(57) **Abstract**

The invention relates to a precast cementitious paving element (100) which includes a squat body (120). The body (120) comprises a substantially planar, operatively upper face (140), a pair of opposing side faces (160), a pair of opposing end faces (180) and an operatively lower mounting face (200). The mounting face (200) is corrugated and includes a plurality of alternating, longitudinally extending, parallel grooves (220) and ridges (240). When seen in end view, the mounting face (200) exhibits a castellated profile. The invention also extends to a kerb element (10) which includes a solid, precast concrete, multifaceted body (12) which includes a pair of opposing planar end faces (14), a pair of opposing planar side faces (16), an obliquely slanted face (18) on one side of the body (12), an operatively upper face (20) and an operatively lower mounting face (22).

## Description

### FIELD OF INVENTION

This invention relates to the construction of pavements, pathways or roads and in particular to constructional details of paving elements and kerbstones or kerb elements.

### BACKGROUND OF INVENTION

When laying paving elements in the construction of a pavement, the paving elements are bedded in or on a support base of either bedding sand or cement screed prior to setting thereof. When manufacturing a large paving element it is difficult to ensure that the element is of uniform thickness throughout. In other words, the dimensions of larger paving elements may deviate slightly from a set specification. It is however important for aesthetic as well as structural reasons that the upper surface of a pavement is level and even. When paving elements are laid in or on uneven bedding or pavers that vary in thickness are laid next one another, parts of the paving elements tend to lift up or rock to and fro when pressure is applied thereto or their exposed edges wear, for example, when a vehicle drives across the pavement. The larger the individual paving elements become, the more difficult it becomes to lay them evenly.

Generally pathways, sidewalks and roads are lined with a number of kerbstones or kerb elements which are laid end-to-end collectively forming a kerb or road edge. A basic kerbstone or element has at least six faces and is secured in place by cementing at least one of the faces to a ground surface and/or to an adjoining element. A kerb element is installed on a ground or other surface by laying at least one face of the kerb element in or on wet cement screed, i.e. screed which has not yet set, and carefully manoeuvring it into place to ensure even screed penetration along a length of the kerb element. However, it often happens that voids form between the cement screed and the face of the kerb element which weakens the bond between the screed and the kerb element and may lead to loosening of the kerb element as time progresses. It may take a long time and meticulous care to ensure a strong bond between the element and the screed. In addition, poor laying of the kerb element in the screed, which may be caused by an uneven distribution of screed or poor laying technique, may result in a weak bond which eventually works loose. The same goes for large paving elements. It is an object of this invention to provide means which the Inventor believes will at least alleviate the above problems. In addition it would increase the flexural strength of the kerb element when installed and increase the speed of installation.

### SUMMARY OF INVENTION

In accordance with the invention, there is provided a precast cementitious paving element for use in the construction of pavements, the paving element including a squat body defining an operatively upper face and an opposing mounting face which is receivable in or on a support base and which includes a plurality of recesses and/or protrusions such that at least part of the mounting face exhibits a castellated profile when seen in cross-section.

"Cross-section" refers to a section formed by a plane cutting through the body of the element at a right angle to an axis. A *transverse* cross-section and a *longitudinal* cross-section therefore both fall within the definition of a cross-section. The term "cross-section" should therefore not be read as referring only to a transverse cross-section. Furthermore, in the context of this specification, a kerb element or kerbstone falls within the definition of a paving element. Accordingly, a kerb element or kerbstone can be defined as a paving element forming part of a kerb.

The mounting face may be an operatively lower or bottom face of the paving element.

The recesses and/or protrusions may be in the form of grooves and/or ridges respectively. More specifically, the mounting face may be corrugated having alternating grooves and ridges. The grooves may each define a planar base surface. The base surfaces may be coplanar. Each ridge may define a planar landing surface. The landing surfaces may be coplanar. The coplanar base surfaces may define a first plane and the coplanar landing surfaces may define a second plane such that the first plane and second plane are parallel. The grooves and ridges themselves may be parallel.

The paving element may be rectangular when seen in plan view, for example being in the form of a slab. In this embodiment, the grooves and ridges may extend longitudinally for at least a major part of the mounting face. The grooves and ridges, respectively, may accordingly be laterally spaced apart. Accordingly, the body may comprise a pair of opposing side faces, a pair of opposing end faces, an operatively upper face and an opposing lower or bottom face (i.e. the mounting face).

More particularly, the paving element may be square when seen in plan view. It is to be appreciated that shape of the body is not limited to the embodiments named above, and the body may be in any practicable shape without departing from the scope of the invention.

The grooves may be regularly spaced apart. Accordingly, the landing surfaces of adjacent ridges may be equal in width. The ridges may be regularly spaced apart. Accordingly, the base surfaces of adjacent grooves may be equal in width. The base and landing surfaces may be equal in width.

The dimensions of the body may be L metres (length) by B metres (breadth), wherein L ranges from 0.1 m to 2.5 m inclusive and wherein B ranges from 0.1 m to 2.5 m inclusive, and L and B preferably range between 0.2 m and 2 m.

The grooves and/or ridges may be between 3 mm and 50 mm in depth/height, and preferably between 10 mm and 20mm.

Side faces and/or end faces of the body may include a number of spaced apart protuberances. Each protuberance may be in the form of a ridge which extends transversely across the face from an operatively lower edge of the face toward an operatively upper edge of the face.

In a particular embodiment in accordance with the invention the paving element is specifically a precast cementitious kerb element which includes an elongate body. The kerb element may include recesses and/or protrusions which extend laterally and are longitudinally spaced apart. The plurality of recesses and/or protrusions may be provided on a side face of the body of the kerb element. The kerb element may further include a longitudinally outermost pair of recesses which are wider than a remainder of inwardly disposed recesses such that the wider recesses aid in handling of the paving element which is in the form of a kerb element.

In accordance with the invention there is provided a precast cementitious kerb element which includes an elongate body defining at least one mounting face which is receivable in or on a support base and which includes a plurality of recesses and/or protrusions on a greater part of the mounting face.

In the context of this specification the word 'plurality' should be understood to mean more than two in number.

The recesses and/or protrusions may be longitudinally spaced. The body may be a solid body and the kerb element may be precast concrete. The body may be elongate including an operatively lower or bottom mounting face, a pair of opposing end faces, a pair of opposing side faces and an operatively upper face. The plurality of recesses and/or protrusions may also be provided on a side face of the kerb element.

The mounting face may have a castellated profile when viewed from the side. The recesses and protrusions may be in the form of grooves and ridges respectively. More specifically, the mounting face may be corrugated having alternating grooves and ridges. The grooves may each define a planar base surface. The base surfaces may be coplanar. Each ridge may define a planar landing surface. The landing surfaces may be coplanar. The planes in which the base surfaces and landing surfaces lie may be parallel. The grooves and ridges may extend laterally and may be longitudinally spaced apart along the mounting face. The grooves and ridges may extend for the entire width of the mounting face.

The grooves may be evenly or regularly spaced apart. Consequently, the respective landing surfaces may have equal widths.

Similarly the ridges may be evenly or regularly spaced apart. Consequently, the base surfaces of the grooves may have equal widths. The widths of the base surfaces and the landing surfaces may be equal. The base surfaces may be at least as wide as the landing surfaces.

A longitudinally outermost pair of grooves may be wider than a remainder of inwardly disposed grooves.

The end faces, side faces and operatively upper face may be substantially planar.

The kerb element may be between 0.2m and 3m in length. The grooves or base surfaces may be between 30mm and 80mm wide and the ridges or landing surfaces may be between 30mm and 60mm wide. The grooves may be 10mm to 50mm deep.

Edges of the ridges may be orthogonal or alternatively the edges of the ridges may be outwardly slanted.

The invention extends to a method of a laying at least one precast cementitious paving element which includes a body defining a mounting face which is receivable in or on a support base and which includes a plurality of recesses and/or protrusions such that at least part of the mounting face exhibits a castellated profile when seen in cross-section, the method including:
preparing a screed of a settable material for receiving the paving element;
positioning the paving element in or on the wet screed with the mounting face of the paving element facing downward; and
manoeuvring the paving element in place such that the screed substantially fills the recesses formed in the mounting face of the paving element.

The method may include arranging a plurality of paving elements side-by-side in order to form a pavement. The screed may be an adhesive screed such as cement screed. The method may further include allowing the screed to set.

### BRIEF DESCRIPTION OF DRAWINGS

The invention will now be further described, by way of example, with reference to the accompanying drawings.

In the drawings:
Figure 1 illustrates a three-dimensional view of a kerb element in accordance with the invention;
Figure 2 shows a sectional view of the kerb element of figure 1 through II-II *in situ* (in place);
Figures 3 to 7 illustrate longitudinal sections through various embodiments of the kerb element;
Figure 8 shows a three-dimensional view of a paving element in accordance with the invention from the bottom;
Figure 9 shows a top view of the paving element of figure 8;
Figure 10 shows a side view of the paving element of figure 8; and
Figure 11 shows an end view of the paving element of figure 8.

### DETAILED DESCRIPTION OF PREFERRED EMBODIMENT

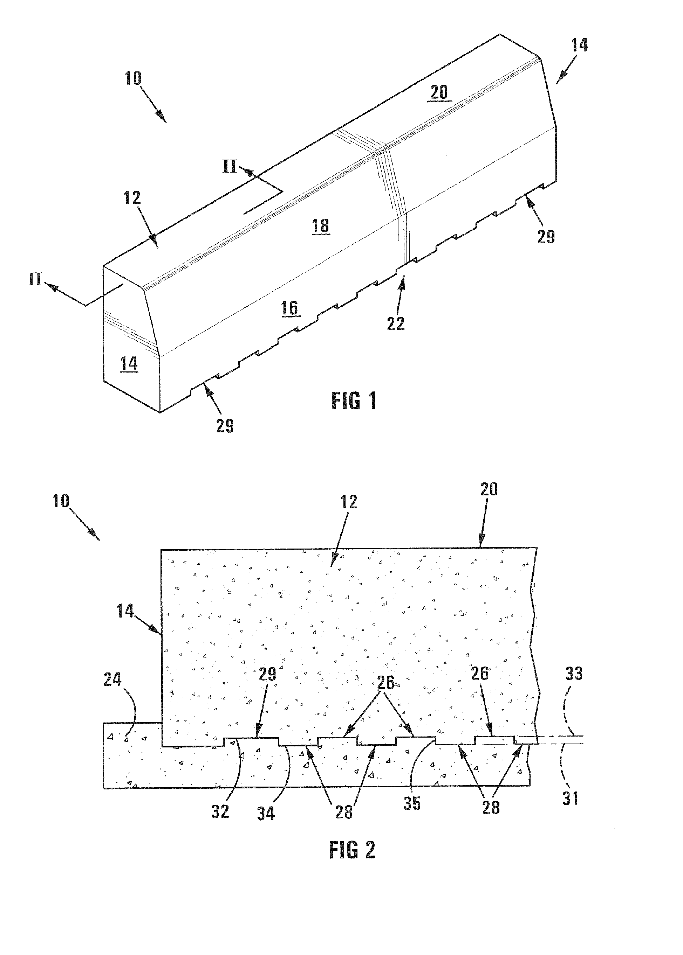

In figures 1 to 7, the same reference numerals or characters are used to refer to the same or similar features of different embodiments of the kerb element. Reference numeral 10 refers generally to a kerb element in accordance with the invention used to line the edge of a road or sidewalk or pathway. The kerb element 10 includes a solid, precast concrete, multifaceted body 12 which includes a pair of opposing planar end faces 14, a pair of opposing planar side faces 16 (only one side being shown in the drawings), an obliquely slanted face 18 on one side of the body 12, an operatively upper face 20 and an operatively lower mounting face indicated by reference numeral 22.

The kerb element 10 is laid in a wet (i.e. not yet set) concrete screed 24 prepared on a support base or ground surface for bonding the kerb element 10 to the surface or base. A common application for the kerb element 10 in accordance with the invention is for forming the edge or kerb of a sidewalk or pathway by laying a number of elements 10 end-to-end in a line such that end faces 14 of adjacent elements 10 abut or are closely spaced together in conventional fashion.

The mounting face 22 has a castellated profile when viewed from the side (see figures 2 to 6) and includes a plurality of parallel, laterally extending, longitudinally spaced apart and alternating grooves 26 and ridges 28. Each groove 26 defines a planar base surface 32. The base surfaces 32 are all coplanar lying in a first plane 33. Each ridge 28 defines a planar landing surface 34. The landing surfaces 34 are all coplanar lying in a second plane 31. The first plane 33 and second plane 31 are parallel. A pair of longitudinally outermost grooves 29 are dimensioned such that they are wider than the inwardly disposed grooves 26 (figures 1 to 6). With particular reference to figures 2 to 6, each groove 26 and neighbouring ridges 28 together define upright planar surfaces 35 which extend between the base surface 32 of the groove 26 and the landing surfaces 34 of the respective neighbouring ridges 28.

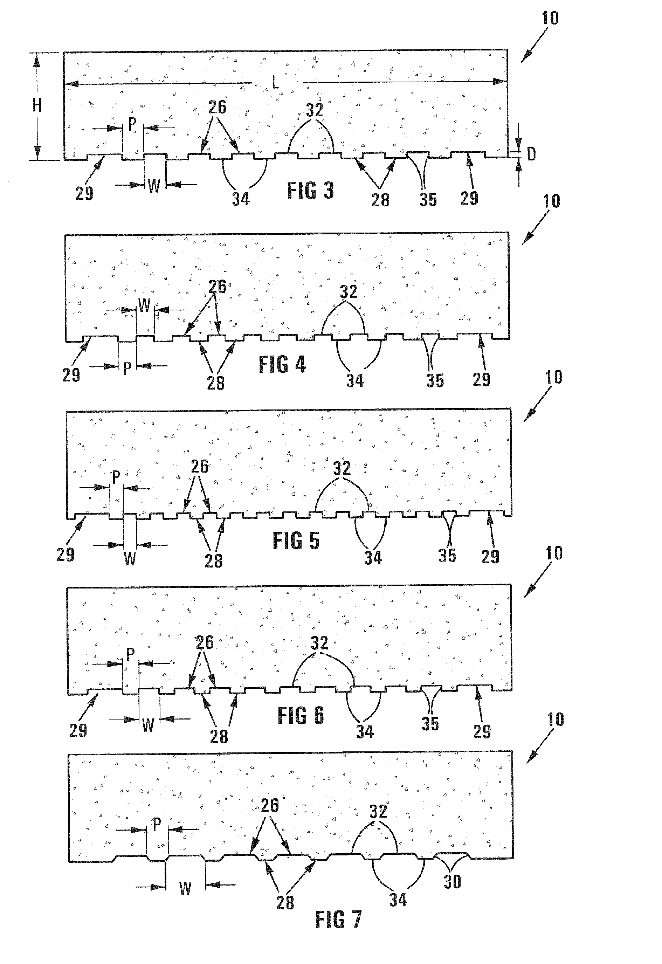

Figures 3 to 7 show different embodiments of the kerb element 10. The main feature which distinguishes the different embodiments from one another is the configuration and dimensioning of the grooves 26 and ridges 28. In an example embodiment of the kerb element 10 shown in figure 3, the element 10 has a length L of 1m and a height H of 250mm. The grooves 26 have a depth D of 10mm and a width W of 50mm. The ridges 28 have a width P of 50mm. In the embodiment shown in figure 4, the grooves 26 have a width W of 40mm and the ridges 28 have a similar width P of 40mm. In figure 5, the widths W and P of the grooves 26 and ridges 28 respectively are 30mm. In the embodiment shown in figure 6, the grooves 26 have a width W of 45mm which is wider than the width P of the ridges 28 of 35mm. Finally in figure 7, W is 80mm and P is 40mm. In addition, outwardly slanted planar surfaces 30, on either side of each ridge 28, join the landing surfaces 34 to the base surfaces 32.

The advantage of the kerb element 10 as described herein over conventional kerbstones is that the plurality of ridges 28 and grooves 26 serve as gripping formations which enables easier handling of individual elements 10 by installers. A further, and possibly more significant, advantage of the parallel ridges 28 and grooves 26 is that they ensure a better bind between the mounting face 22 and the concrete screed 24 due to an increased binding surface area. Furthermore, the ridges 28 penetrate into the screed 24 ensuring better adhesion and facilitating easier laying of the elements 10, especially on screed surfaces which are not level. It is to be understood that at least the ridges 28 of the kerb element 10 sink into the wet screed 24 under the weight of the kerb element 10 to such an extent that the screed 24 fills up the recesses or grooves 26. In this manner, the problems associated with the laying of conventional kerbstones are overcome or at least alleviated.

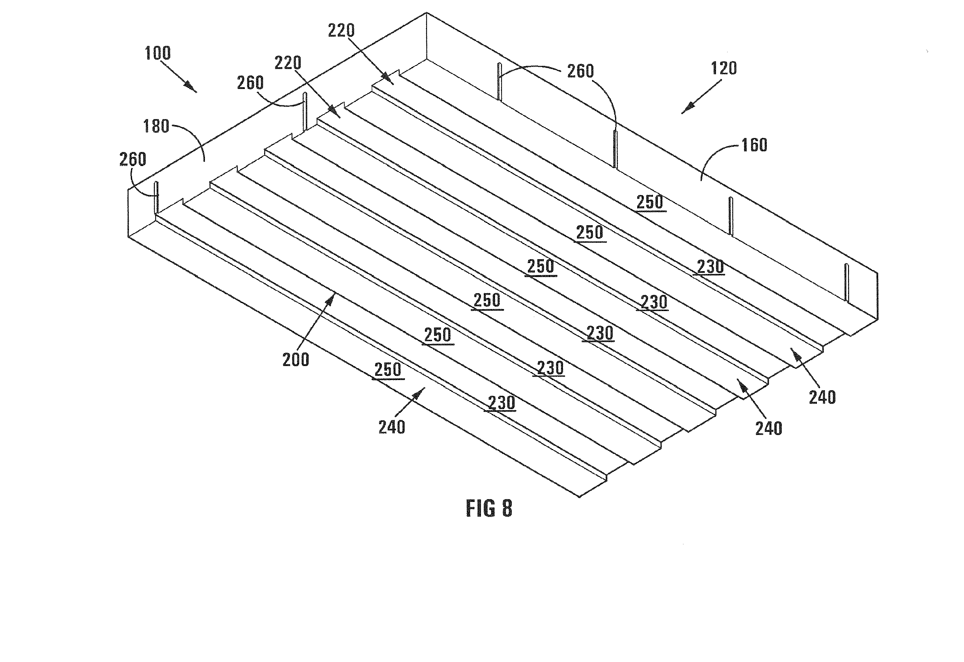

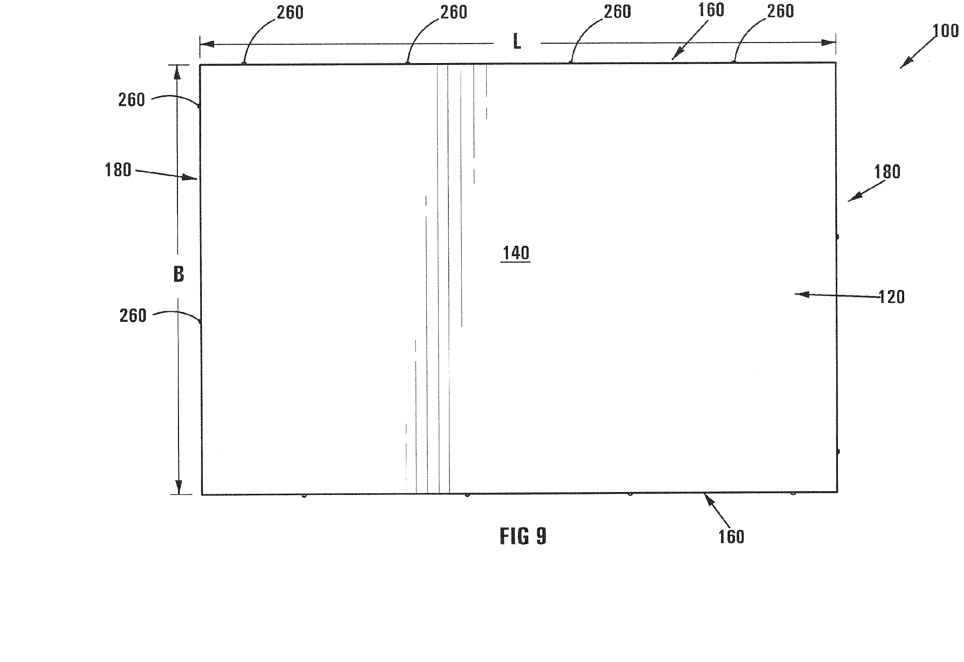

In figures 8 to 11, reference numeral 100 refers generally to a paving element in accordance with the invention.

The paving element 100 includes a squat body 120 which is rectangular when seen in top view. The body 120 comprises a substantially planar, operatively upper or top face 140, a pair of opposing side faces 160, a pair of opposing end faces 180 and an operatively lower mounting face 200.

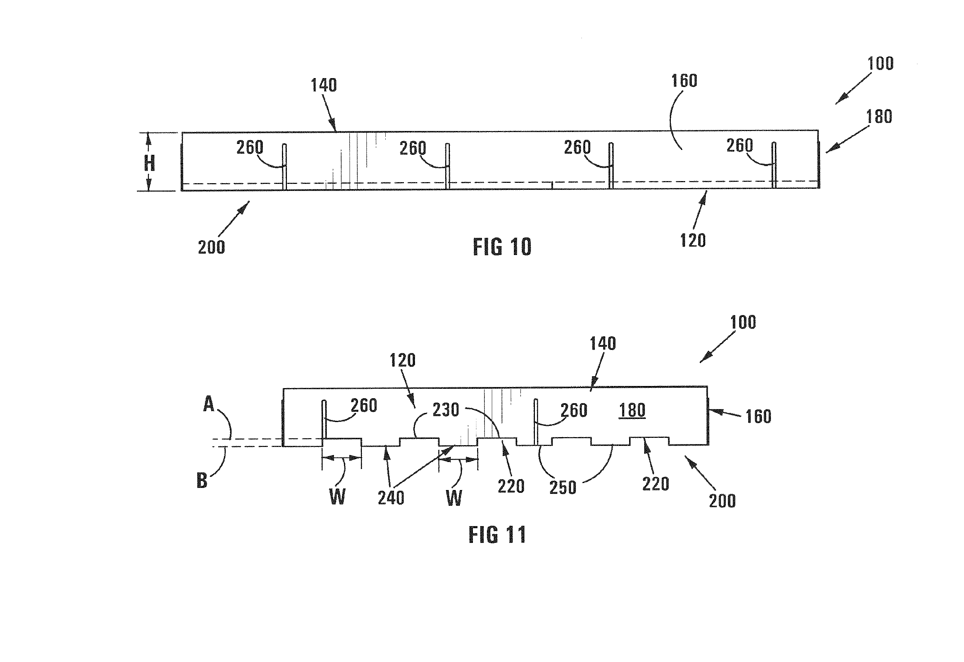

With specific reference to figures 8 and 11, the mounting face 200 is corrugated and includes a plurality of alternating, longitudinally extending, parallel grooves 220 and ridges 240. When seen in end view (see figure 11), the mounting face 200 exhibits a castellated profile.

Each groove 220 defines a planar base surface 230. The base surfaces 230 of each groove 220 are coplanar and lie in a first plane A. Each ridge 240 defines a planar landing surface 250. The landing surfaces 250 are also coplanar and lie in a second plane B. The planes A, B are parallel. The width W of each base surface 230 and each landing surface 250 is equal such that the grooves 220 and ridges 240 are evenly spaced apart. In this example embodiment the width W is 55mm.

A number of spaced apart protuberances in the form of ridges 260 are provided on each side face 160 and each end face 180. The ridges 260 are elongate and extend upward from an operatively lower edge of each face 160, 180 toward an opposing edge.

The body 120 has a length L of 900mm, a breadth B of 600mm and a height H of 80mm. The grooves 220 are 10mm deep in the example embodiment. Paving elements of different sizes are however envisaged without departing from the scope of the invention. Paving elements having dimensions of 2 metres by 2 metres also fall within the scope of this invention. The width, depth and regularity of the grooves might vary in accordance to the size of the paving element in question.

Ideally paving elements 100 are laid in bedding sand or cement screed in close proximity to one another such that upper surfaces of the elements 100 are level. The Inventor believes that the grooves 220 and ridges 240 provided on the mounting face 200 of each paving element 100 facilitate easier laying of the paving elements 100 in bedding sand or screed owing to the fact that the ridges 240 penetrate into the sand or screed. Accordingly, a lot of time is saved in the construction of pavements and kerbs because the there is no need to lift, level and re-lay uneven elements. Use of the paving elements, in accordance with the invention, therefore leads to a big time saving which translates into a cost saving. The resultant effect is that, what may have been a previously uneven bedding, or pavers which have dimensional variances, is levelled out by manoeuvring the paving element around in the bedding until the grooves 220 are filled up with bedding and most voids between the mounting face 200 and the bedding are filled. The castellated profile of the mounting face 200 is particularly useful in the laying of large paving elements 100 because it is difficult to level out bedding over a large surface area and because large paving elements are difficult to produce such that they have exactly the same thickness.

## Claims

1. A precast cementitious paving element for use in the construction of pavements, the paving element 10, 100 including a squat body 12, 120 defining an operatively upper face 20, 140 and a mounting face 22, 200 which is receivable in or on a support base, **characterised in that** the mounting face 22, 200 includes a plurality of recesses and/or protrusions such that at least part of the mounting face 22, 200 exhibits a castellated profile when seen in cross-section.

2. A precast cementitious paving element as claimed in claim 1, **characterised in that** the paving element is specifically a precast cementitious kerb element 10 which includes an elongate body 12.

3. A precast cementitious paving element as claimed in claim 2, **characterised in that** the recesses and/or protrusions extend laterally and are longitudinally spaced apart.

4. A precast cementitious paving element as claimed in claim 3, **characterised in that** the mounting face 22 is an operatively bottom face of the body 12 and the recesses and/or protrusions are in the form of grooves 26 and/or ridges 28 respectively.

5. A precast cementitious paving element as claimed in claim 4, **characterised in that** the mounting face 22 has alternating grooves 26 and ridges 28, each groove 26 defining a planar base surface 32 and each ridge 28 defining a planar landing surface 34.

6. A precast cementitious paving element as claimed in claim 5, **characterised in that** the base surfaces 32 are coplanar defining a first plane 33 and the landing surfaces 34 are coplanar defining a second plane 31 such that the first plane 33 and second plane 31 are parallel.

7. A precast cementitious paving element as claimed in any of claims 4 to 6 inclusive, **characterised in that** the grooves 26 and ridges 28 themselves are parallel.

8. A precast cementitious paving element as claimed in any of claims 5 to 7 inclusive, **characterised in that** the grooves 26 are regularly spaced apart and the ridges 28 are regularly spaced apart.

9. A precast cementitious paving element as claimed in claim 8, **characterised in that** the paving element 10 includes a longitudinally outermost pair of recesses 29 which are wider than a remainder of inwardly disposed recesses 26 such that the wider recesses 29 aid in handling of the paving element 10.

10. A precast cementitious paving element as claimed in claim 1, **characterised in that** the paving element 100 includes a side face 160 and/or an end face 180 which includes a number of spaced apart protuberances, each protuberance being in the form of a ridge 260 which extends transversely across the face 160, 180 from an operatively lower edge of the face 160, 180 toward an operatively upper edge of the face 160, 180.

11. A method of a laying at least one precast cementitious paving element 10, 100 which includes a body 12, 120 defining a mounting face 22, 200 which is receivable in or on a support base and which includes a plurality of recesses and/or protrusions such that at least part of the mounting face 22, 200 exhibits a castellated profile when seen in cross-section, **characterised in that** the method includes:
preparing a settable screed for receiving the paving element 10, 100;
positioning the paving element 10, 100 in or on the wet screed with the mounting face 22, 200 of the paving element 10, 100 facing downward; and
manoeuvring the paving element 10, 100 in place such that the screed substantially fills the recesses formed in the mounting face 22, 200 of the paving element 10, 100.

12. A method as claimed in claim 11, **characterised in that** the method includes arranging a plurality of paving elements 100 side-by-side in order to form a pavement.

13. A method as claimed in claim 11 or claim 12, **characterised in that** the screed is an adhesive screed.
